# EUROPEAN PATENT SPECIFICATION

(11) **EP 0 267 726 B1**
(45) Date of publication and mention of the grant of the patent: **26.05.1993**
(21) Application number: 87309699.4
(22) Date of filing: 03.11.1987
(51) Int. Cl.: C09D 5/00, C08F 291/00, C08F 2/22

(54) **Coreshell particle dispersions**
Dispersionen von Kern-Schale-Teilchen
Dispersions de particules coeur-enveloppe

(30) Priority: 06.11.1986 US 927766
(43) Date of publication of application: 18.05.1988
(73) Proprietor: ROHM AND HAAS COMPANY, Philadelphia Pennsylvania 19105 (US)
(72) Inventor: Vogel, Martin, Jenkintown Pennsylvania 19046 (US); Kowalski, Alexander, Plymouth Meeting Pennsylvania 19462 (US); Scott, Joseph David, Philadelphia Pennsylvania 19128 (US)
(74) Representative: Angell, David Whilton

(56) References cited:
- EP-A- 0 188 325
- CA-A- 888 129
- US-A- 4 368 218
- US-A- 4 386 133

## Description

The present invention is concerned with a process for the preparation of aqueous dispersions of core-shell particles which are suitable for use as opacifying agents in coating compositions. More particularly, the present invention relates to an emulsion polymerisation process for preparing aqueous dispersions of core-shell particles having solvent-swellable cores and hard polymer shells, which, after the core has been swollen and the dispersion then dried, form hollow particles having a single microvoid per particle.

Aqueous dispersions of core-shell heteropolymers having water-swollen cores are known in the art. For example, US-A-4,427,836 discloses a process for the preparation of water-insoluble particulate heteropolymers. Sequential emulsion polymerization is used to prepare an aqueous dispersion of particles having cores including polymeric acid. The core of each particle is at least partially encased by a polymeric shell or "sheath" which is permeable to a volatile base, such as ammonia or an organic amine. The volatile induces swelling of the acid-containing core prior to formation of the shell. The shell is not permeable to permanent, non-volatile bases such as sodium hydroxide. Alternatively, the cores include polymeric base, swellable by a volatile acid, and the shells are permeable to the volatile acid.

An aqueous dispersion of these core-shell particles having base-swollen cores can be useful in formulating aqueous coatings compositions, which typically may include a synthetic polymeric binder, often itself in the form of an aqueous dispersion, and a light-scattering pigment, very frequently rutile titanium dioxide. On drying of the coating composition, not only is water lost, but also the volatile base from the swollen cores of the core-shell particles. The cores collapse within the shells, forming lightscattering microvoids within the dry coating, and permitting reduction of the amount of expensive titanium dioxide required to opacify the coating.

While these dispersions have proven very useful to coatings manufacturers seeking to economically provide high quality water-based paints having good hiding properties, such as "one-coat" interior latex paints, the volatile base induced swelling of the cores of the microvoid-forming particles results in several disadvantages.

For example, the basic conditions required to swell the cores can accelerate the hydrolysis of sensitive polymers, such as poly(vinyl acetate), which are often used as coating binders. While the cores can alternatively include polymerized base swollen with volatile acid, hydrolysis of sensitive polymers may also be acid-catalyzed.

Another disadvantage is the necessity of encapsulating the acid- or base-functional polymer before swelling the core to reduce coagulation. However, this may create memory effects which discourage internal void formation when the core-shell particles are dried.

A further disadvantage lies in the fact that water tends to be retained in cores indefinitely at high humidity. Thus, paint containing these particles does not develop full opacity when dried under high humidity conditions.

It is an object of the present invention to provide a process for preparing an aqueous dispersion of core-shell polymer particles which may be capable of developing full opacity under high humidity conditions and which do not require a volatile acid or base to swell the cores.

Solvent swollen aqueous dispersions are also known in the art. For example, US-A-3,896,138, US-A-3,817,880 and US-A-3,819,542 disclose particles including a "soft" (i.e. glass transition temperature lower than ambient) initial polymer stage and an optional "hard" (i.e. glass transition temperature higher than ambient) second polymer stage. The particles are swollen with a water-miscible solvent and they dry to form an opaque cellular film. However, the soft "core" initial stage is not encapsulated by a hard shell when the second stage is polymerized. If it were, the soft initial stage would not form a film as required. Further, a hard polymer particulate can be cold blended with the soft initial stage polymer.

US-A-3,775,353, US-A-3,897,300 and US-A-3,931,061 disclose single stage aqueous dispersions of poly(styrene) and poly(styrene-acrylonitrile) having diameters of about 0.1 - 0.2 micrometers. These dispersions are converted to good opacifying white pigments by treating with swelling solvent and high shear. Although opacifying power is thought in these cases, to derive from the creation of internal voids from swelling and subsequent removal of the swelling solvent, we can find no evidence of void formation, and voids inside 0.2 micrometer particles would be too small to scatter light significantly. It is believed that the process causes coagulation of the small particles and that aggregates containing entrapped air to provide the observed opacity.

US-A-3,891,577 discloses solvent swollen polymer particles, optionally prepared by emulsion polymerization, which are subsequently used to create voids. However, the swollen particles are dispersed in liquid medium, preferably a polymerizable monomer, which in turn can be dispersed in water. The liquid monomer droplets containing the multiple solvent-swellen cores are polymerized to give hard beads which contain multiple voids after removal of the swelling solvent.

EP-A-0188325 discloses the use of a base to swell a core-shell particle whose core has acid functionality.

In accordance with the present invention we provide a use of a nonaqueous solvent as the sole swellant for swelling a core of a water-insoluble core-shell particle formed by a process comprising emulsion polymerizing at least one ethylenically unsaturated polymerizable monomer in an aqueous medium to form the core, swelling the core with the nonaqueous solvent and forming a polymeric shell around the core particle by emulsion polymerizing at least one ethylenically unsaturated polymerizable monomer, wherein the glass transition temperature of the polymeric shell around the swollen core is at least 50°C and the partition coefficient of the nonaqueous solvent between the core and the shell is at least 1.25.

The monomer composition and polymerization conditions for forming the exterior shells are selected so that the glass transition temperature of the polymeric exterior shells around the swollen interior cores is greater than about 50°C. The shell is preferably formed from a hard rigid polymer so that it retains its geometry when the solvent eventually evaporates in order to form an internal void inside each particle. Further, it is important that the monomer compositions and polymerization conditions for the core particles and the exterior shells be selected so that the partition coefficient of the swelling solvent between the interior core and exterior shell, that is, the ratio of the molar concentration of the swelling solvent in the core phase to the molar concentration of the swelling sovent in the shell phase, at equilibrium, is at least about 1.25, and preferably exceeds 1.50.

The core particles can be swollen with a nonaqueous solvent before the shells are polymerized on the core particles. Alternatively, the interior cores can be swollen with a nonaqueous solvent after the shells have been polymerized on the core particles. The shells are preferably polymerized by a gradual addition technique. The monomer composition of the core particles and the nonaqueous solvent are preferably nonaqueous solvent and the average solubility parameter of the core particles are generally comparable.

After preparation of the aqueous dispersion of core-shell particles, the dispersion can be used in formulating an aqueous coating composition, such as an interior latex paint. As the coating composition dries, solvent is lost from the cores of the core-shell particles, causing the core to collapse and thus forming a single microvoid in each of the core-shell particles. The core-shell particles when dried contribute to the opacity and hiding power of the coating formed from the coating composition and permit the proportion of inorganic pigment used to opacify the coating, typically rutile titanium dioxide, to be reduced.

The core particles employed in the present invention can be prepared by conventional emulsion polymerization techniques. Preferably, the average molecular weight of the polymers contained within the core-shell particles is minimized so that the core particles can be quickly and easily swollen with the nonaqueous solvent.

Small polymer particles (less than 1 micron) are reluctant to swell, even with good solvents, because the increase in interfacial area is generally unfavorable. However, the extent of swelling can be increased by lowering the molecular weight of the swollen polymer. Preferably, a very hydrophobic, low polarity core polymer with very low molecular weight is used that will swell with a hydrophobic solvent such as an aliphatic hydrocarbon. Thus, the average molecular weight of the polymeric core particles is preferably less than the molecular weight characteristic of the onset of entanglement coupling of polymer chains of the monomer compositions selected. Similarly, multifunctional monomers are preferably omitted from the monomer composition of the core particles and polymerization conditions are selected to minimize adventitious crosslinking. On the other hand, polymeric core particles prepared by emulsion polymerization are preferred over surfactant stabilized monomer droplets or the like, because a narrow particle size distribution can be realized by the emulsion polymerization, increasing the opacity obtainable with a given weight of core-shell particles.

The dimensions of the unswollen core particles are determined by the volume swelling ratio of the core particles in the presence of the nonaqueous solvent and the requirement that the swollen core particles collapse when dry to yield microvoids which effectively scatter visible light. For example, when the volume swelling ratio of the core particles in the presence of the nonaqueous solvent is about 5, the unswollen core particles can have an average diameter of about 300 nm, so that the average diameter of the swollen core particles is about 500 nm, which is on the order of the magnitude of the wavelength of visible light. The volume swelling ration depends on both the monomer composition and the average molecular weight of the core particle polymers, as well as on the nature of the swelling solvent.

In carrying out the polymerization of the core particles, a polymerization initiator is employed. Examples of polymerization initiators which can be employed include polymerization initiators of the free radical type, such as ammonium or potassium persulfate, which can be used alone or as the oxidizing component of a redox system, which also includes a reducing component such as potassium metabisulfite, sodium thiosulfate or sodium formaldehyde sulfoxylate. The reducing component is frequently referred to as an accelerator. The initiator and accelerator, commonly referred to as catalyst, catalyst system or redox system, may be used in proportion form 0.01% to 3% each, based on the weight of monomers to be copolymerized. Examples of redox catalyst systems include t-butyl hydroperoxide/sodium formaldehyde sulfoxylate/Fe(II), and ammonium persulfate/sodium bisulfite/sodium hydrosulfite/Fe(II). The polymerization temperature may be from room temperature upto 90°C, and can be optimized for the catalyst system employed, as is conventional.

Chain transfer agents including mercaptans, polymercaptans and polyhalogen compounds are desirable in the polymerization mixture to reduce polymer molecular weight. Examples of chain transfer agents which may be used include long chain alkyl mercaptans such as n--dodecyl mercaptan, alcohols such as isopropanol, isobutanol, lauryl alcohol or t-octyl alcohol, carbon tetrachloride, tetrachloroethylene and/or tricholorobromoethane. Preferably from 0 to 10% by weight, based on the weight of the monomer mixture, can be used. Preferably, enough chain transfer agent is used to provide polymer having a low average molecular weight, so that the nonaqueous solvent provides substantial swelling of core particles. Of course, the polymer molecular weight can be kept low by other techniques known in the art, such as selecting the ratio of initiator to monomer to be high.

Examples of nonionic monoethylenically unsaturated monomers which may be employed in preparing the core particles include one or more or styrene, vinyl toluene, ethylene, vinyl acetate, vinyl chloride, vinylidene chloride, acrylonitrile, (meth)acrylamide, (C₁-C₂₀) alkyl and (C₃-C₂₀) alkenyl esters of (meth)acrylic acid; for example, methyl methacrylate, methyl acrylate, ethyl (meth)acrylate, n-butyl (meth)acrylate, isobutyl (meth)acrylate 2-ethylhexyl (meth)acrylate, benzyl (meth)acrylate, lauryl (meth)acrylate, oleyl (meth)acrylates, palmityl (meth)acrylate, and stearyl (meth)acrylate.

The expression "(meth)acrylate acid" is intended to serve as a generic expression embracing both acrylic and methacrylic acid. Similarly, the expression "(meth)acrylate" is intended as a generic expression embracing both acrylic acid and methacrylic acid esters.

In general, ionizable monomers such as acrylic and methacrylic acid can also be employed in preparing the core particles, provided the ionizable monomer is included at a low level so that the extent of selling of the core particles by the non aqueous solvent is not significantly reduced.

Examples of ionizable monomers which can be used to prepare the core particles include one or more of ethylenically unsaturated carboxylic acid monomers such as (meth)acrylic acid, beta-acryloxypropionic acid, mixtures of beta-acryloxypropionic acid and higher oligomers of acrylic acid, methacryloxypropionic acid, itaconic acid, citraconic acid, crotonic acid, maleic acid and maleic anhydride, fumaric acid, monomethyl maleate, monomethyl fumarate and monomethylitaconate, and mixtures thereof as well as mixtures of methacrylic and acrylic acids.

The monomer composition of the core particle polymer is preferably selected so that the average solubility parameter of the core particle polymer is generally comparable to the solubility parameter of the non aqueous solvent which is to be used to swell the core particles. It is preferred that the non aqueous solvent be highly soluble in the core particle polymer and relatively insoluble in the shell. In addition, as discussed below, the monomer composition and polymerization conditions of the core particles should be selected so that the partition coefficient of the nonaqueous solvent between the interior core and outer shell of the core-shell particles is greater than or equal to about 1.25. Preferably the partition coefficient is greater than or equal to about 1.50.

The core particles may be prepared using a seed polymer emulsion to control the number of particles produced by the core particle emulsion polymerization as is known in the art. The core particles are preferably polymerized using a gradual addition technique in which monomer, which can be in the form of a monomer emulsion, is gradually added to the polymerization vessel, as is well known in the emulsion polymerization art. Alternatively, single shot or stepwise addition techniques may be used to prepare the core emulsion. If desired the monomer composition of the monomer emulsion which is fed to the polymerization vessel may be varied during the polymerization.

Aggregation of the core particles may be discouraged by inclusion of stabilizing surfactant in the polymerization mix. In general, the growing core particles are stabilized during emulsion polymerization by one or more surfactants, such as an anionic or nonionic surfactant, or a mixture thereof, as is well known in the emulsion polymerization art.

Examples of suitable anionic surfactants include, for example, the alkali metal salts of a di (C₇-C₂₅)alkylsulfosuccinates, the higher fatty alcohol sulfates, such as sodium lauryl sulfate; alkylaryl sulfonates such as sodium and potassium isopropylbenzene sulfonates or isopropyl naphthalene sulfonates; alkali metal higher alkyl sulfosuccinates, such as sodium octyl sulfosuccinate; sodium N-methyl, N-palmitoyltaurate or sodium oleyl isothionate; and in alkali metal salts of alkylarylpolyethoxyethanol sulfates, sulfonates or phosphates, such as sodium tert-octylphenoxypoly(ethoxy)ethyl sulfates and nonylphenoxy poly(ethoxy)ethyl phosphates, either having 1 to 7 oxyethylene units.

Examples of suitable nonionic surfactants include poly(oxyalkylene) alkylphenol ethers, poly(oxyalkylene) alkyl ethers, poly(oxyalkylene) esters of fatty acids, and/or ethyleneoxide-propylene oxide block copolymers.

The average particle size of the core particles after polymerization but prior to swelling with the nonaqueous solvent can be any size which is readily obtainable by emulsion polymerization techniques, such as from about 0.02 micrometers to 3 micrometers. However, larger-sized core-shell particles tend to swell more readily with the nonaqueous solvent than smaller-sized core-shell particles. On the other hand, larger-sized particles may present burnish problems when used to opacify aqueous coatings compositions which form glossy coatings. In this case, smaller-sized core-shell particles are preferred to be used to impart opacity. Particle size of the core-shell particle can be determined by photon correlation spectroscopy. Light scattering techniques such as photon correlation spectroscopy measure the Z-average particle size. Preferably the core-shell particles have a low polydispersity index such as under about 2 as determined by a Nano-Sizer™ (Coulter) photon correlation spectrometer.

After the core particles have been polymerized, they may be swollen by addition of a nonaqueous solvent to the aqueous dispersion of core particles. Alternatively, the interior cores of the core-shell particles can be swollen after the outer shells have been polymerized on the core particles to form the core-shell particles. As used in this specification and claims, "cores" refers to both the core particles and to the interior cores of core-shell particles.

A hard (Tg greater than or equal to about 50°C) shell polymer is polymerized by emulsion polymerization to encapsulate the core. The swelling solvent for the core should have low solubility in the shell polymer or the shell will be softened to the point where voids do not form. A polar polymer insoluble in the hydrophobic nonaqueous swelling solvent is preferably used as the shell polymer.

Preferably, the nonaqueous solvent used to swell the cores is an aliphatic hydrocarbon; for example, isooctane, n-pentane, hexane, and mixtures of aliphatic hydrocarbons can be used. The proportion of nonaqueous solvent employed is preferably limited to a concentration which will substantially swell the core particles but which is less than a concentration which will cause the shells to imbibe a significant amount of nonaqueous solvent with a corresponding reduction in the modulus of the shell.

Although the partition coefficient of the nonaqueous solvent between the core and shell substantially favors swelling of the cores, to some extent the nonaqueous solvent will dissolve in the shells of the core-shell particles. The effective glass transition temperature of the shells containing the dissolved solvent will be lower than that of shells which do not contain solvent. An excessive amount of solvent dissolved in the shells requires that a coating composition containing the core-shell particles dry for a longer period than otherwise before opacity develops, the additonal time being required for loss of the excessive solvent. Further, the excessive solvent may unduly reduce the effective glass transition temperature of the shells, resulting in shell disruption and loss of microvoids. Preferably, the shells contain no more no more than about 10% by weight dissolved solvent when the cores are swollen, and more preferably, no more than about 5% by weight.

The monomer composition of the polymer forming the shells of the core-shell particles is preferably selected so that the glass transition temperature of the shells surrounding the sovent-swollen core particles is greater than about 50°C. These shells will contain some dissolved solvent, thus lowering their effective glass transition temperature.

The Tg of a polymer with a specific monomer composition is determinable in a known manner either experimentally or by calculation. The method of calculating the Tg based upon the Tg of homopolymers of individual monomers is described by Fox, Bull. Am. Physics Soc. 1,3, pg. 123 (1956). Monomers may be selcted to obtain the approxpriate Tg for example through the use of the "Rohm and Haas Acrylic Glass Transition Temperature Analyzer", Publication CM-24 L/cb of Rohm and Haas Company, Philadelphia, PA. The effect of dissolved solvent on the glass transition temperature of a polymer can be measured experimentally as bulk materials and can be calculated using known techniques. See, for example, M. H. Gutierriez et al., J. Poly. Sci. (Part A) Vol. 24, 655-663 (1986).

It is important that the nonaqueous solvent be substantially more soluble in the cores than the shells of the core-shell particles. This requirement can be expressed in terms of the partition coefficient of the solvent between the core and shell. At present, it is not possible to determine experimental partition coefficients for solvents dissolved in the cores and shell of particulate dispersions. However, the partition coefficient can be calculated for these systems, as a function of solvent and the monomer compositions of the constituent core and shell phases of the core-shell particles.

A solvent will partition between two polymer phases so that its chemical potentials in the two phases are equal at equilibrium. The chemical potential is usually defined as the natural logarithm of the activity of the solvent in the polymer. The activity of a solvent in a polymer can be calculated using the UNIFAC method disclosed in T. Oishi and J. M. Prausnitz, Ind. Eng. Chem. Proc. Des. Dev., Volume 17, 333 (1978). However, the UNIFAC method requires information which is not available in the literature for many solvent-polymer pairs, namely, the densities of the solvent and the polymer, and the number of external degres of freedom per solvent molecule.

To overcome the difficulty, the UNIFAC method can be modified so that, rather than calculating reduced volumes from the solvent and polymer densities, average solvent and polymer reduced volumes are used. For example, the average solvent reduced volume can be assumed to be 1.35; and the average polymer reduced volume can be assumed to be 1.194 for polymers with glass transition temperatures below ambient temperature and 1.232 for polymers with glass transition temperature above embient temperature. Alternatively, the actual solvent and polymer densities can be measured experimentally or obtained from the literature.

The number of degrees of freedom per solvent molecule is defined to be the product of the square of the solubility parameter of the solvent, the solvent hard core volume, and the difference between the solvent reduced volume and the solvent reduced volume taken to the two-third power, divided by the product of the gas constant and the absolute temperature. Solubility parameters are readily available for many solvents, see, for example, K.L. Hoy, J. Paint Tech., Volume 42 (#541) 76 (1970). The solvent hard core volume can be calculated using the hard core or Van der Waals' volumes of the constituent groups as discussed in D.W. Van Krevelen, Properties of Polymers (Elsevier, New York, 1972) 50-54. Group hard core volumes are given in A. Bondi, Physical Properties of Molecular Crystals, Liquids and Glasses (Wiley 1968).

The partition coefficient can be calculated using an interative technique as follows. It is assumed that all of the solvent is initially present in one of the two polymer phases, and a small amount of solvent is "transferred" to the other phase. For example, it can be assumed that all the solvent is initially present in the core polymer phase. The chemical potential of the solvent in both of the two polymer phases is calculated using the UNIFAC method. The difference between the chemical potentials of the solvent in either phase is calculated. The "transfer" of a small amount of solvent from the first phase to the second phase, and the calculation of the chemical potential of the solvent in both phases are repeated until the difference in chemical potential changes sign. Finally, the partitioning of the solvent between the phases is calculated by interpolation. This iterative techniques for calculating the partition coefficient can be programmed for computation by computer.
The actual polymerization of the shells on the core particles is preferably performed by a gradual addition emulsion polymerization technique. In general, the same types of ethylenically unsaturated monomers can be used in preparing shells as are used in preparing the core particles, with the understanding that the shells must be sufficiently rigid to resist collapse when solvent is lost from the cores of the particles. This requirement is reflected in the criterion that the glass transition temperature of the shells in the presence of swelling solvent be equal to or greater than about 50°C. Further, the monomer composition of the shell polymer must be consistent with the partition coefficient criterion expressed above.

The polymerization initiator and stabilizing surfactant used to polymerize the shell monomers can be selected from those conventionally used in emulsion polymerization, for example, those disclosed above for use in polymerizing the core particles.

It should be noted that the monomer composition of the polymer phase is not the only determinent of the activity and chemical potential of the solvent in the polymer phase. The molecular weight and the extent of crosslinking of the polymer also affect the activity of the solvent. In general, low polymer molecular weight tends to increase solvent activity and high polymer molecular weight and crosslinking lead to decreased solvent activity. Thus, the difference in solvent activity between the core phase and shell phase of the core-shell particles can be increased by lowering the average molecular weight of the core phase and raising the average molecular weight of the shell phase. The interior core is preferably more hydrophobic than the exterior shell.

The ethylenically unsaturated monomer polymerized in forming the shell phase can also include at least one multi-ethylenically unsaturated monomer to raise the average molecular weight of the shell polymer. Preferred multi-ethylenically unsaturated monomers are allyl (meth)acrylate, tripropyleneglycol di(meth)acrylate, diethyleneglycol di(meth)acrylate, ethyleneglycol di(meth)acrylate, 1,6-hexanediol di(meth)acrylate, 1,3-butyleneglycol di(meth)acrylate, diallyl phthalate, trimethylolpropane tri(meth)acrylate, and/or divinylbenzene. Especially preferred multi-ethylenically unsaturated monomers are allyl methacrylate, diallyl phthalate, and trimethylolpropane trimethacrylate. Other means of cross linking the shell polymers known in the art may also be employed.

Examples of monofunctional ethylenically unsaturated monomers useful in preparing the polymeric shells include one or more of ethyl acrylate, butyl acrylate, methyl methacrylate, styrene, vinyl chloride and acrylonitrile may be employed. Methyl methacrylate and styrene are the preferred monomers. It is preferred that the exterior shells are polymerised either from monomer including at least 50% by weight styrene or at least 50% by weight polymerisable ethylenically unsaturated monomers selected from the esters of acrylic acid and/or esters of methacrylic acid. When the monomer composition of the core is selected to give a relatively nonpolar hydrophobic core particle, for swelling with a nonpolar hydrophobic solvent, it is preferred that the monomer composition of the shell polymer be selected to give a relatively polar hydrophilic shell to reduce the solubility of the solvent in the shell.

In addition to the core phase and the exterior shell phase described above, additional intermediate shell phases can be polymerized on the core particles intermediate to the core particle phase and the exterior shell if desired. For example, an intermediate shell stage is particularly useful when it is desired to use a nonpolar polymer such as polystyrene for the exterior shell. If an intermediate shell is not used, the nonpolar polymer may form inside the core particle rather than forming a shell around it. By first forming an intermediate shell of more polar polymer, such as poly (methylmethacrylate), the nonpolar polymer can be formed as shell rather than inside or adjacent the core. Thus, the polarity of the intermediate shell is typically greater than the polarity of the core and outer shell phases.

In addition to discontinuous polymerization processes in which polymerization is interrupted between prepartion of the core particles and the exterior shell such as discussed above, the process of the present invention also contemplates continuous polymerization techniques in which polymerization conditions (such as one or more of the monomer emulsion feed, temperature, initiation feed et al.) are varied continuously from the polymerization of the core particles to polymerization of the exterior shells on the core particles.

The core-shell particles prepared by the process of the present invention are useful as opacifying agents in coatings compositions. Drying coating compositions which contain aqueous dispersions of these core-shell particles is believed to cause the formation of single individual voids within the core-shell particles which efficiently contribute to the opacity of the dried compositions containing the core-shell particles. When the core-shell particles of the present invention are used as opacifying agents, the amount of polymer deposited to form the shell polymer is generally such so as to provide an overall particle size of the core-shell particle swollen with nonpolar solvent of from about 0.05 micrometers to 5 micrometers and having a polydispersity index under or nor more than about 2.

The core-shell particles of the present invention are useful for aqueous coating and impregnating compositions such as those of US-A-2,795,564, as opacifying agents and such compositions either as a supplement to, or replacement of, pigmentary matter and/ or extenders therefor. For these purposes the aqueous dispersions of the core-shell polymer may be added directly to the coating compositions. Alternatively, dry core-shell polymer can be added directly to the coating compositions. The core-shell polymers may be isolated from the dispersions, by filtration or decantation, and then the nonaqueous solvent can be removed as by drying or volatilization, under conditions such that microvoids are formed and retained in the individual particles, the latter being more or less free-flowing in character so that they can be packaged, shipped or stored before use. Spray-drying techniques known in the art can be used to produce a powder of dry core-shell particles. The dry powder thus obtained can also be used in coatings based on organic solvents provided that the shell component of the core-shell polymers is not soluble in the organic solvent.

Besides being useful in water-based paints based on vinyl or acrylic polymer aqueous dispersion or aqueous solutions of vinyl or acrylate polymers, to replace all or part of opacifying pigments heretofore used, especially titanium dioxide, microvoid containing core-shell polymers of the present invention may be used for similar purposes in other coating systems, including resin formaldehyde condensation products of thermosetting type, such as phenoplast and aminoplast, including urea formaldehyde, and melamine formaldehyde, and other condensates, for example, water dispersible alkyd resins, as well as solution alkyds and other solvent based resins.

An opacified composition adapted for coating and/or impregnating a surface can comprise an aqueous dispersion of water-insoluble emulsion vinyl addition polymer having an apparent Tg of from -40°C to 50%C, and water-insoluble core-shell particles of the present invention at a pigment volume concentration of at least about 5%, inorganic pigment, such as rutile titanium dioxide, and optional extender.

If desired, an additional stage can be polymerized on the relatively hard exterior shell of the core-shell particles. For example, the relatively hard, or "structural", exterior shells can be coated with an additional shell formed by emulsion polymerization and having a glass transition temperature under 50°C, for example, in the range from about 5%C to about 25%C in the case of trade sales coatings. The additional polymeric shell can have a sufficiently low Tg so the additional shells will coalesce with one another when an aqueous dispersion of the core-shell particles is dried to bind together the hard structural shells containing the interior cores. Aqueous dispersions of core-shell particles having the "soft" (i.e. Tg less than 50°C) additional shells can be incorporated in aqueous coating compositions. The additional shell polymer can replace a portion or all of the binder resin which is otherwise required when the "soft" additional shell is absent.

The following examples are illustrative of the present invention which is in no way limited thereby. In the examples the parts and percentages are by weight and temperatures are in degrees Celsius unless otherwise stated.

### 1. Example 1 - Preparation of Core-Shell Particle Dispersion

### A. Emulsion Polymerization of a Low Molecular Weight Poly(Isobutyl Methacrylate) Core

To 750g of deionized water heated to 85°C in a 5-liter round-bottomed flask (equipped with paddle stirrer, thermometer, reflux condenser and nitrogen sweep) was added 1.5g of sodium persulfate dissolved in 10g of water followed by 20g of a seed copolymer aqueous dispersion (45% solids, 110 nm average diameter, composition 52% butyl acrylate, 46% methyl methacrylate and 2% methacrylic acid). Then, an emulsion consisting of 180g of isobutyl methacrylate, 20g of n-dodecyl mercaptan, 0.7g of sodium dodecylbenzenesulfonate and 70g of water was added at 2.8g/min. along with a separate feed of 1.5g of sodium persulfate in 40g of water at a rate of 0.3g/min. The temperature was maintained at 85%C until the end of the two additions and for 30 minutes longer. The product had an average particle diameter of 290 nm (laser light scattering), 18.5% solids content, pH = 1.9, Mw = 6,000 and Mn = 2,000. The swelling of the latex particles with isooctane at room temperature was measured by rapidly stirring a sample of latex with an equal volume of isooctane for 24 hours and allowing the excess isooctane to separate as a second layer. The average particle diameter was now 496 nm for a volume swelling ratio of 5.0.

### B. Prepartation of Core-Shell Polymers

Part 1. (Comparative) To 470g of deionized water at 80°C in a flask (equipped with a paddle stirrer, thermometer, reflux condenser, and nitrogen sweep) was added 1.2g of sodium persulfate dissolved in 10g of water followed by 100g of the core polymer dispersion. A mixture of 46g of butyl methacrylate, 66.7g of methyl methacrylate and 2.3g of methacrylic acid was added at 2g min. maintaining the temperature at 80°C. Ten minutes after the addition was complete, 4g of 28° aqueous ammonia was added and then 90g of isooctane. Then 115g of styrene was added at 2g/min. along with 0.5g of sodium persulfate in 20g of water. The temperature was held at 80°C for 16 hours until the conversion was greater than 89%. The product (Dispersion #1) had 27.6% solids content, pH = 8.5, and an average diameter of 740 nm.
Part 2. The procedure of Part 1 was repeated only the isooctane was added immediately after the core polymer and before the addition of any monomer. The product (Dispersion #2) had 27.2% solids content, pH = 8.6, and an average diameter of 730 nm.
Part 3. The procedure of Part 1 was repeated only the isooctane was omitted. The product (Dispersion #3) had 30.0% solids contents, pH = 8.6, and an average diameter of 660 nm.

The three dispersions from Parts 1, 2 and 3 were allowed to dry on microscope slides, immersed in oil and examined at high magnification (1000X). A single microvoid could be seen (dark circles with diameter around 400 nm) in each particle from Part 1 and Part 2 but none could be seen in the particles from Part 3.

### II. Preparation of Coating Compositions

The three dispersions (#1, #2, and #3) were blended with a commercial latex paint binder (Primal AC-64 from Rohm and Haas Company) in the proportions 15% core-shell polymer solids to 85% binder solids. The three mixtures were spread on black vinyl charts with a Dow film applicator. The dry films containing core-shell dispersions #1 and #2 were whitish due to light scattering by the microvoids while the film containing dispersion #3 was clear.

Dispersions #2 and #3 were formulated into grey paints as follows: TiO₂ pigment (Ti-Pure R-900, 104g), 4.2g of H₂0, 15.5g of propylene glycol, 10.0g of ethylene glycol and 3.9g of Tamol 731 dispersant were mixed with high shear until the TiO₂ was well dispersed. Then, with slow stirring, was added 336g of Primal AC-388 acrylic latex paint binder, 8.4g of Texanol, 4.4g of propylene glycol, 15.0g of ethylene glycol and 222g of 2.5% solution of hydroxyethyl cellulose (QP-4400) in water. The resulting white paint was tinted grey with a lamp black dispersion. To half of the gray paint was added 125g of the dispersion #2 and to the other half was added 125g of disperion #3. Both paints contained 10 PVC (pigment volume concentration) of TiO₂ and 30 PVC of dispersion #2 or #3. Thick drawdowns (10 mils dry thickness) of both paints were made and allowed to dry for one week. The paint with dispersion #3 (comparative) had a reflectance (green filter) of 41.0%. The paint with dispersion #2 (this invention) had a reflectance of 43.1° due to additional light scattering by the microvoids formed in dispersion #2. The higher reflectance also indicated that the paint containing dispersion #2 was the more opaque of the two.

### Example 2. 2-EHA core, n-Heptane Solvent and 98 MMA/2 MAA Shell.

A low molecular weight core polymer dispersion is prepared as in Example 1 substituting 2-ethylhexyl acrylate (2-EHA) for isobutyl methacrylate and using a smaller seed polymer with average diameter 60 nm.

The shell polymerization is carried out as a separate rection in a flask equipped as in Example 1 and charged with 520g of deionized water, 1.2g of sodium persulfate, 60g of the above core polymer dispersion and 45g of n-heptane. The flask contents are stirred at 80°C while a monomer emulsion consisting of 75g of deionized water, 0.25g of sodium dodecylbenzenesulfonate, 225.4g of methyl methacrylate (MMA) and 4.6g of methacrylic acid (MAA) is added gradually in one hour and then held for an additional 30 min. at 80°C. Some of the product is diluted to 2% solids and spread on a microscope slide to dry. The residue on the slide is immersed in oil with n_{D} = 1.51 and examined with a microscope at 900X. The polymer is invisible under these conditions but voids can be seen.

### Example 3. p-Methylstyrene Core, Ethylbenzene Solvent and 50 Styrene/50 Acrylonitrile Shell

A low molecular weight core polymer dispersion is prepared as in Example 1 from 190g of p-methylstyrene and 10g of methyl beta-mercaptopropionate.

The shell polymerization is carried out as in Example 2 using 60g of the above core polymer dispersion, 90g of ethylbenzene and a shell monomer mixture of 115g each of styrene and acrylonitrile.

### Example 4. 95 St/5 ALMA Shell

A flask equipped as in Example 1 is charged with 630g of deionized water, 1.5g of potassium persulfate, 85g of the core polymer dispersion prepared in Example 1 and 75g of isooctane. The mixture is stirred at 80°C while a solution of 15g of allyl methacrylate (ALMA) in 285g of styrene (St) is added gradually over one hour and then held for an additional two hours at 80°C. The product is cooled to room temperature and filtered through a 100 mesh (0.15mm) screen.

### Example 5. PVC Shell

A 2-liter Parr stirred autoclave is charged with 630g of deionized water, 1.6g of ammonium persulfate, 85g of the core polymer dispersion prepared in Example 1 and 75g of isooctane. The autoclave is sealed and the contents are degassed under vacuum for 5 min. The contents are stirred at 70°C while 300g of vinyl chloride liquid is pumped in under pressure over one hour. The pressure in the autoclave rises gradually to 200 psi (1.38 x 10⁶Pa). The contents are held at 70°C for one hour while the pressure dropped to 50 psi (3.45 x 10⁵Pa). The residual vinyl chloride is vented at room temperature.

### Example 6. Hard 98 MMA/2 MAA Shell Followed by Soft 55 BA/44 MMA/1 MMA Shell

Example 2 is repeated only immediately after the addition of the methyl methacrylate/methacrylic acid monomer emulsion, a second monomer emulsion (33g of deionized water, 0.1g of sodium dodecylbenzenesulfonate, 55g of butyl acrylate, 44g of methyl methacrylate, and 1g of methacrylic acid) is added gradually over a 30 min. period at 80°C followed by a 30 min. hold at 80°C. When some of the product is allowed to dry at room temperature, a white solid results with considerable cohesiveness. In contrast, the product from Example 2 dries to a white powder. Thus, the soft outer shell of this example causes partial coalescence (film formation) of the particles on drying.

### Comparative Example

A void-forming core-shell emulsion polymer with solvent-swollen core of this invention was compared to the prior art, namely a core-shell emulsion polymer with a water-swollen core and available commercially as Ropaque OP-42 opacifier from Rohm and Haas Co. The solvent-containing core-shell polymer of Example 1 (Dispersion #1) and Ropaque OP-42 opacifier were each blended with Primal AC-64 binder and the blends were spread on black charts as in Example 1. The wet charts were allowed to dry in a cabinet maintained at 25°C and 80% relative humidity. The binder formed films which were dry to the touch within 30 min. The film containing the core-shell polymer of Example 1 (Dispersion #2) turned whitish within one hour when the isooctane evaporated, leaving microvoids in the film. The film containing the Ropaque OP-42 opacifier was still clear 24 hours later due to retention of water in the cores of the core-shell particles and did not turn whitish until the relative humidity was lowered below 70% allowing the water in the core to evaporate and microvoids to form.

As will be apparent to those skilled in the art, various modifications can be made in the details of the process of the present invention disclosed herein, all within the spirit and scope of the invention as defined in the appended claims.

Primal, Ti-Pure, Texanol Ropaque are trade marks which may be registered in one or more of the Designated States.

## Claims

1. Use of a nonaqueous solvent as the sole swellant for swelling a core of a water-insoluble core-shell particle formed by a process comprising emulsion polymerizing at least one ethylenically unsaturated polymerizable monomer in an aqueous medium to form the core, swelling the core with the nonaqueous solvent and forming a polymeric shell around the core particle by emulsion polymerizing at least one ethylenically unsaturated polymerizable monomer, wherein the glass transition temperature of the polymeric shell around the swollen core is at least 50°C and the partition coefficient of the nonaqueous solvent between the core and the shell is at least 1.25.

2. Use according to claim 1, wherein the core particle is swollen with the nonaqueous solvent before the shell is polymerized on the core particle.

3. Use according to claim 1 or claim 2, wherein the average polarity of the polymeric shell is greater than the average polarity of the unswollen polymer core particle, and the core particle is swollen with a nonpolar solvent.

4. Use according to any one of the claims 1 to 3, wherein the exterior shell is polymerized from monomer including at least one multiethylenically unsaturated monomer and the polymer of the exterior shell is crosslinked.

5. Use according to any one of the preceding claims, wherein the nonaqueous solvent is selected from the aliphatic hydrocarbons and mixtures thereof, preferably being one of more of isooctane, n-pentane and hexane.

6. Use according to any one of the preceding claims, wherein the process further comprises polymerizing at least one intermediate shell around the core particle by emulsion polymerizing at least one ethylenically unsaturated monomer subsequent to polymerization of the core particle and prior to the polymerization of the exterior shell, the intermediate shell preferably being more polar than the interior core and the exterior shell of the particle.

7. Use according to any one of the preceding claims, wherein the process further comprises forming an additional shell having a glass transition temperature less than about 50°C onto the exterior shell of the core-shell particle.

8. Use as claimed in any one of the preceding claims, wherein the process further comprises isolating the core-shell particle from the dispersion and then drying the particle such that a microvoid is formed and retained in the particle.

9. Use of a particle formed by a process as defined in any one of the preceding claims as an opacifier in a coating composition.

## Patentansprüche

1. Verwendung eines nichtwässerigen Lösungsmittels als Alleinquellmittel zum Quellen eines Kern eines wasserunlöslichen Kern-Hülle-Partikels, gebildet durch ein Verfahren, bei dem mindestens ein ethylenischungesättigtes polymerisierbares Monomer in einem wässerigen Medium zur Bildung des Kerns Emulsionspolymerisiert wird, der Kern mit dem nichtwässerigen Lösungsmittel gequollen wird und eine polymere Hülle um das Kern-Partikel durch Emulsionspolymerisation von mindestens einem ethylenisch-ungesättigten polymerisierbaren Monomer gebildet wird, worin die Glasumwandlungstemperatur der polymeren Hülle um den gequollenen Kern mindestens 50°C ist und der Verteilungskoeffizient des nichtwässerigen Lösungsmittels zwischen dem Kern und der Hülle mindestens 1,25 ist.

2. Verwendung nach Anspruch 1, worin das Kern-Partikel mit dem nichtwässerigen Lösungsmittel gequollen wird, bevor die Hülle auf dem Kern-Partikel polymerisiert wird.

3. Verwendung nach Anspruch 1 oder 2, worin die Durchschnittspolarität der polymeren Hülle größer ist als die Durchschnittspolarität des ungequollenen, polymeren Kern-Partikels und das Kern-Partikel mit einem nichtpolaren Lösungsmittel gequollen wird.

4. Verwendung nach einem der Ansprüche 1 bis 3, worin die äußere Hülle von einem Monomer polymerisiert wird, das mindestens ein multi-ethylenisch-ungesättigtes Monomer umfaßt, und das Polymer der äußeren Hülle quervernetzt wird.

5. Verwendung nach einem der vorhergehenden Ansprüche, worin das nichtwässerige Lösungsmittel aus den aliphatischen Kohlenwasserstoffen und Gemischen davon ausgewählt ist, vorzugsweise ein oder mehr von Isooctan, n-Pentan und Hexan ist.

6. Verwendung nach einem der vorhergehenden Ansprüche, worin das Verfahren ferner die Polymerisierung von mindestens einer Zwischenhülle um das Kern-Partikel durch Emulsionspolymerisation von mindestens einem ethylenischungesättigten Monomer nachfolgend der Polymerisation des Kern-Partikels und vor der Polymerisation der äußeren Hülle umfaßt, wobei die Zwischenhülle vorzugsweise mehr polar als der innere Kern und die äußere Hülle des Partikels ist.

7. Verwendung nach einem der vorhergehenden Ansprüche, worin das Verfahren ferner die Bildung einer zusätzlichen Hülle mit einer Glasumwandlungstemperatur von weniger als etwa 50°C auf der äußeren Hülle des Kern-Hüll-Partikels umfaßt.

8. Verwendung nach einem der vorhergehenden Ansprüche, worin das Verfahren ferner die Isolierung des Kern-Hülle-Partikels aus der Dispersion und dann die Trocknung des Partikels umfaßt, so daß ein Mikrohohlraum gebildet und in dem Partikel beibehalten wird.

9. Verwendung eines nach einem Verfahren der vorstehenden Ansprüche gebildeten Partikels als Trübungsmittel in einer Beschichtungszusammensetzung.

## Revendications

1. Utilisation d'un solvant non aqueux comme seul agent gonflant pour faire gonfler un noyau d'une particule à noyau et enveloppe, insoluble dans l'eau, formée par un procédé comprenant une polymérisation en émulsion d'au moins un monomère polymérisable à insaturation éthylénique, dans un milieu aqueux, pour former le noyau, faire gonfler le noyau avec le solvant non aqueux et former une enveloppe polymère autour de la particule de noyau par polymérisation en émulsion d'au moins un monomère polymérisable à insaturation éthylénique, dans laquelle la température de transition vitreuse de l'enveloppe polymère entourant le noyau gonflé est d'au moins 50°C et le coefficient de partage du solvant non aqueux entre le noyau et l'enveloppe est d'au moins 1,25.

2. Utilisation selon la revendication 1, dans laquelle la particule de noyau est gonflée avec le solvant non aqueux avant la polymérisation de l'enveloppe sur la particule de noyau.

3. Utilisation selon la revendication 1 ou la revendication 2, dans laquelle la polarité moyenne de l'enveloppe polymère est supérieure à la polarité moyenne de la particule de noyau polymère non gonflée, et la particule de noyau est gonflée avec un solvant non polaire.

4. Utilisation selon l'une quelconque des revendications 1 à 3, dans laquelle l'enveloppe extérieure est polymérisée à partir d'un monomère, y compris au moins un monomère à plusieurs insaturations éthyléniques, et le polymère de l'enveloppe extérieure est réticulé.

5. Utilisation selon l'une quelconque des revendications précédentes, dans laquelle le solvant non aqueux est choisi parmi les hydrocarbures aliphatiques et des mélanges de ceux-ci, en étant de préférence un solvant parmi un ou plusieurs des solvants isooctane, n-pentane et hexane.

6. Utilisation selon l'une quelconque des revendications précédentes, dans laquelle le procédé comprend aussi la polymérisation d'au moins une enveloppe intermédiaire autour de la particule de noyau, par polymérisation en émulsion d'au moins un monomère à insaturation éthylénique, après la polymérisation de la particule de noyau et avant la polymérisation de l'enveloppe extérieure, l'enveloppe intermédiaire étant de préférence plus polaire que le noyau intérieur et que l'enveloppe extérieure de la particule.

7. Utilisation selon l'une quelconque des revendications précédentes, dans laquelle le procédé comprend aussi la formation d'une enveloppe supplémentaire possédant une température de transition vitreuse inférieure à environ 50°C sur l'enveloppe extérieure de la particule à noyau et enveloppe.

8. Utilisation selon l'une quelconque des revendications précédentes, dans laquelle le procédé comprend aussi le fait d'isoler de la dispersion la particule à noyau et enveloppe, puis de sécher la particule de manière à ce qu'un microvide soit formé et retenu dans la particule.

9. Utilisation d'une particule formée par un procédé tel que défini dans l'une quelconque des revendications précédentes, comme opacifiant dans une composition de revêtement.
